# DEMANDE DE BREVET EUROPEEN

(11) **EP 0 887 888 A1**
(43) Date de publication de la demande: **30.12.1998**
(21) Numéro de dépôt: 98202027.3
(22) Date de dépôt: 17.06.1998
(51) Int. Cl.: H01R 13/24, H04M 1/72, H04B 1/38

(54) **Dispositif à contacts rétractables**

(30) Priorité: 26.06.1997 FR 9708036
(71) Demandeur: Koninklijke Philips Electronics N.V., 5621 BA Eindhoven (NL)
(72) Inventeur: Pinel, Marcel, 75008 Paris (FR)
(74) Mandataire: Caron, Jean

(57) **Abrégé**

Le dispositif est muni d'un organe de contact présentant une pièce (21) montée sur un ressort à lame (16) conducteur de l'électricité et relié à un circuit électrique (15) ; au repos, la pièce est située en arrière d'une paroi (14V), mais elle saillit à l'extérieur au travers d'un orifice (13) sous l'effet d'un aimant (23) porté par un appareil (11) à connecter, afin de faire contact avec un plot (9) porté par cet appareil lorsqu'il est accouplé au dispositif.

Applications : notamment aux téléphones portables.

## Description

La présente invention concerne un dispositif pour charger un appareil alimenté par batterie, dispositif muni d'un boîtier portant des organes de contact dont au moins un présente un élément mobile de contact capable d'être rétracté à l'intérieur du boîtier, ou au contraire de saillir à l'extérieur du boîtier par un orifice sous l'attraction d'un aimant porté par l'appareil à charger.

Elle concerne également un appareil alimenté par batterie, comprenant un boîtier muni d'un plot de contact pour la charge de sa batterie au moyen d'un dispositif selon l'invention, avec un aimant pour attirer un élément mobile du dispositif, le plot étant situé en correspondance avec l'organe de contact du dispositif lorsque l'appareil est accouplé au dispositif pour y être rechargé.

L'invention s'applique à tout appareil alimenté par une batterie, par exemple des téléphones portables, des outils à moteur, des rasoirs électriques, des aides auditives, etc.

Un dispositif selon le préambule ci-dessus est connu du document "PATENT ABSTRACTS OF JAPAN", n° 07162494 (Funai Electric co. ltd.). Selon ce document, le dispositif comprend un organe de contact monté sur un support muni d'un axe de rotation et qui, au repos, descend dans le corps du dispositif sous l'effet de son poids ; lorsque l'appareil est posé sur le dispositif, l'organe est attiré par un aimant situé dans l'appareil, afin d'établir un contact avec l'appareil.

Un objet de l'invention est de simplifier la fabrication et le montage du dispositif.

A cet effet, l'élément mobile est réalisé en un métal à la fois conducteur de l'électricité et ferromagnétique, relié mécaniquement et électriquement à un ressort conducteur de l'électricité, lui même connecté électriquement à un circuit électrique, le ressort étant positionné de façon que, au repos, l'organe soit rétracté à l'intérieur du boîtier.

Des modes particuliers de réalisation de l'invention apparaissent dans les revendications dépendantes 2 à 4.

Avantageusement, un appareil comporte deux plots et un seul aimant pour les deux plots.

Ces aspects de l'invention ainsi que d'autres aspects plus détaillés apparaîtront plus clairement grâce à la description suivante d'un mode de réalisation constituant un exemple non limitatif.

La figure 1 représente en perspective un appareil alimenté par une batterie, et un dispositif pour la recharge de la batterie.

La figure 2 représente schématiquement en coupe selon le plan X-X de la figure 1, une partie d'un dispositif et une partie d'un appareil, près d'être accouplés l'un à l'autre.

La figure 3 représente schématiquement en coupe selon l'axe Y-Y de la figure 2, une partie d'un dispositif et une partie d'un appareil, près d'être accouplés l'un à l'autre.

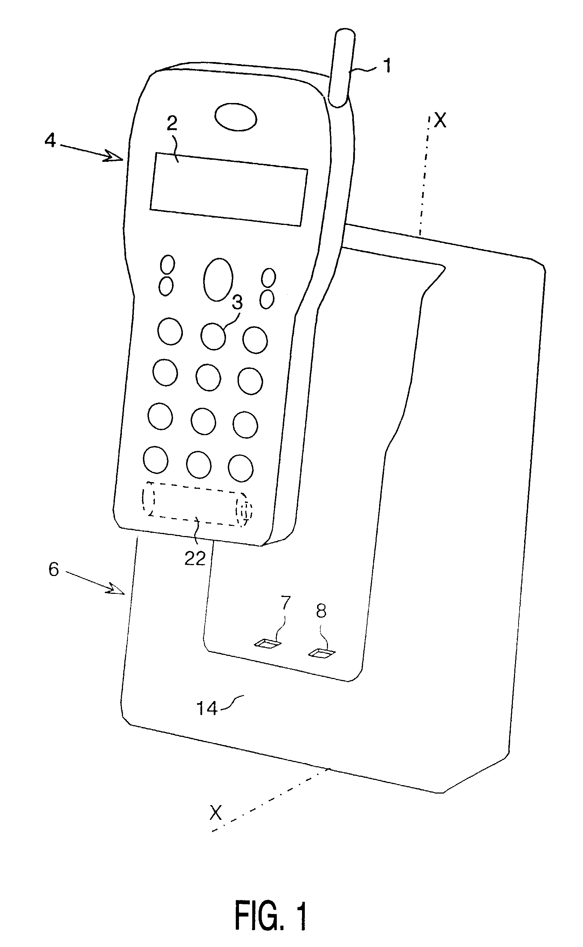

L'appareil alimenté par une batterie, représenté par la figure 1, est ici un téléphone portable 4. Il comprend un corps contenant une batterie 22, et possède en outre un clavier de touches 3 et un écran 2 et, pour recevoir ou émettre des ondes radio, une antenne 1. Il peut être posé, pour la charge de sa batterie, dans un logement d'un dispositif de charge 6, muni de deux organes de contact 7, 8.

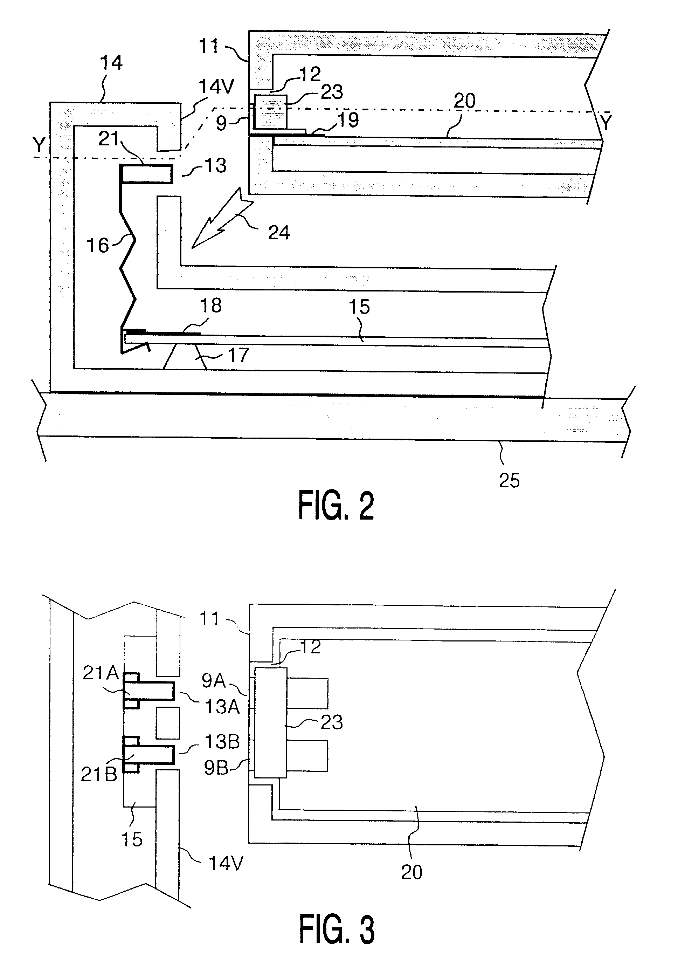

Le dispositif 6 peut par exemple être posé à plat sur sa face arrière, invisible sur la figure, auquel cas sa face indiquée par 14 est la face supérieure. C'est dans cette position qu'il est partiellement représenté en coupe sur la figure 2, où le dispositif est posé à plat sur un plateau 25. La paroi supérieure du boîtier du dispositif de charge y est notée 14, comme sur la figure 1. La figure correspond au cas où l'appareil est près d'être accouplé au dispositif pour y être chargé : l'appareil à charger sera amené dans le logement du dispositif par un mouvement indiqué par la flèche 24.

L'organe de contact du dispositif comporte un élément mobile métallique 21, qui est situé, au repos, en arrière de la partie verticale 14V de la surface extérieure du dispositif, laquelle est percée d'un orifice 13 permettant à l'organe 21 de se déplacer pour saillir à l'extérieur. L'organe 21 est fixé à une extrémité d'une lame élastique 16 qui lui permet de se déplacer horizontalement.

La lame 16 est conductrice de l'électricité, et son autre extrémité est connectée électriquement à un circuit de charge non représenté, qui ne fait pas partie de l'invention. Le dispositif est muni ici d'un circuit imprimé 15 supporté par un pilier 17 et la dite autre extrémité de la lame ressort 16 est soudée sur une métallisation 18 de ce circuit imprimé, par exemple à l'extrémité de ce dernier, sur laquelle l'extrémité du ressort est en outre pincée pour faciliter la manutention du circuit imprimé avant soudure. L'organe 21 est fait ici d'une seule pièce avec le ressort à lame 16. La matière de ce dernier peut par exemple être de l'acier cuivré et/ou étamé.

Il est clair que diverses variantes peuvent être imaginées, par exemple dans le cas d'une géométrie différente de l'ensemble dispositif/appareil, le ressort pourrait être un ressort spiral ; toutefois un tel ressort ne procurerait pas un positionnement aussi précis de l'organe 21.

Le boîtier de l'appareil à charger est indiqué par 11, il possède sur sa tranche un orifice 12 au travers duquel passe un plot de contact 9. L'appareil contient ici un circuit imprimé 20, et la plaque 9 est directement soudée sur une métallisation 19 de ce circuit imprimé. Immédiatement derrière le plot de contact est situé un aimant 23 qui attire l'élément mobile de contact 21 du dispositif de charge lorsque l'appareil est posé dans le logement de ce dispositif, et que sa face 11 est appliquée contre la face 14V.

La figure 3 représente les mêmes éléments vus de dessus. Le dispositif comprend deux éléments mobiles 21A, 21B, fixés au circuit imprimé 15, et l'appareil deux plots de contact 9A , 9B fixés au circuit imprimé 20. Un seul aimant 23 attire en même temps les éléments mobiles 21A et 21B.

## Revendications

1. Dispositif pour charger un appareil alimenté par batterie, dispositif muni d'un boîtier portant des organes de contact dont au moins un présente un élément mobile de contact capable d'être rétracté à l'intérieur du boîtier, ou au contraire de saillir à l'extérieur du boîtier par un orifice sous l'attraction d'un aimant porté par l'appareil à charger, **caractérisé en ce** que l'élément mobile est réalisé en un métal à la fois conducteur de l'électricité et ferromagnétique, relié mécaniquement et électriquement à un ressort conducteur de l'électricité, lui même connecté électriquement à un circuit électrique, le ressort étant positionné de façon que, au repos, l'organe soit rétracté à l'intérieur du boîtier.

2. Dispositif selon la revendication 1, **caractérisé en ce que** l'organe est porté par une extrémité d'un ressort à lame.

3. Dispositif selon la revendication 2, **caractérisé en ce que** l'organe est fait d'une seule pièce avec le ressort à lame.

4. Dispositif selon la revendication 2, **caractérisé en ce qu**'il est muni d'un circuit imprimé et l'autre extrémité du ressort à lame est soudée sur une métallisation du circuit imprimé.

5. Appareil alimenté par batterie, comprenant un boîtier muni d'un plot de contact pour la charge de sa batterie au moyen d'un dispositif selon la revendication 1, et un aimant pour attirer un élément mobile du dispositif, le plot étant situé en correspondance avec l'organe de contact du dispositif lorsque l'appareil est accouplé au dispositif pour y être chargé, **caractérisé en ce que** il comporte deux plots et un seul aimant pour les deux plots.
